# EUROPEAN PATENT APPLICATION

(11) **EP 3 562 003 A1**
(43) Date of publication of application: **30.10.2019**
(21) Application number: 18168692.4
(22) Date of filing: 23.04.2018
(51) Int. Cl.: H02K 9/20, H02K 9/22

(54) **MOTOR DEVICE WITH RAPID HEAT DISSIPATION**

(71) Applicant: Fukuta Electric & Machinery Co., Ltd., 429 Taichung City (TW)
(72) Inventor: CHANG, Chin-Feng, Taichung City (TW)
(74) Representative: Becker Kurig Straus

(57) **Abstract**

A motor device with rapid heat dissipation comprises a shell (10), a stator (20) and multiple heat conducting rods (30, 30A, 30B). The stator (20) is mounted inside the shell (10). The multiple heat conducting rods (30, 30A, 30B) may be mounted to the shell (10) or be mounted to the stator (20). By thermal conduction, the motor device may emit waste heat rapidly to prevent excessively high working temperature.

## Description

### 1. Field of the Invention

The present invention relates to a motor device, and more particularly to a motor device with rapid heat dissipation.

### 2. Description of Related Art

As an important industrial device, a motor can convert electrical power into mechanical power, so the motor may drive other mechanisms. A conventional motor comprises a shell, a stator, and a rotator. The stator is mounted inside the shell; the rotator is rotatably disposed in the stator. The rotator revolves rapidly around an axis of the conventional motor via interactive magnetic forces which come from a magnetic effect of currents. Due to waste heat produced when the rotator revolves, a working temperature of the motor rises higher and higher. Eventually, excessively high temperature causes damage to circuits of the stator and the rotator, and further shortens the conventional motor's service life.

To overcome the shortcomings of the conventional motor, the present invention provides a motor device with rapid heat dissipation.

The motor device with rapid heat dissipation comprises a shell, a stator and multiple heat conducting rods. The stator is mounted inside the shell. The multiple heat conducting rods may be mounted to the shell or may be mounted to the stator. By thermal conduction, the motor device may dissipate waste heat rapidly to prevent damage to circuits of the stator or shortening of the motor device's service life.

### IN THE DRAWINGS:

Fig. 1 is a perspective view of a first embodiment of a motor device with rapid heat dissipation in accordance with the present invention;
Fig. 2 is a perspective view of the motor device in Fig. 1, shown with a shell of the motor device removed;
Fig. 3 is a front side view of the motor device in Fig. 1;
Fig. 4 is an operational perspective view of the motor device in Fig. 2;
Fig. 5 is a perspective view of a second embodiment of a motor device with rapid heat dissipation in accordance with the present invention;
Fig. 6 is a front side view of the motor device in Fig. 5;
Fig. 7 is a partially enlarged front side view of the motor device in Fig. 6;
Fig. 8A shows a first path of heat dissipation of the motor device in Fig. 5;
Fig. 8B shows a second path of heat dissipation of the motor device in Fig. 5;
Fig. 8C shows a third path of heat dissipation of the motor device in Fig. 5; and
Fig. 9 is a partially enlarged front side view of a third embodiment of a motor device with rapid heat dissipation in accordance with the present invention.

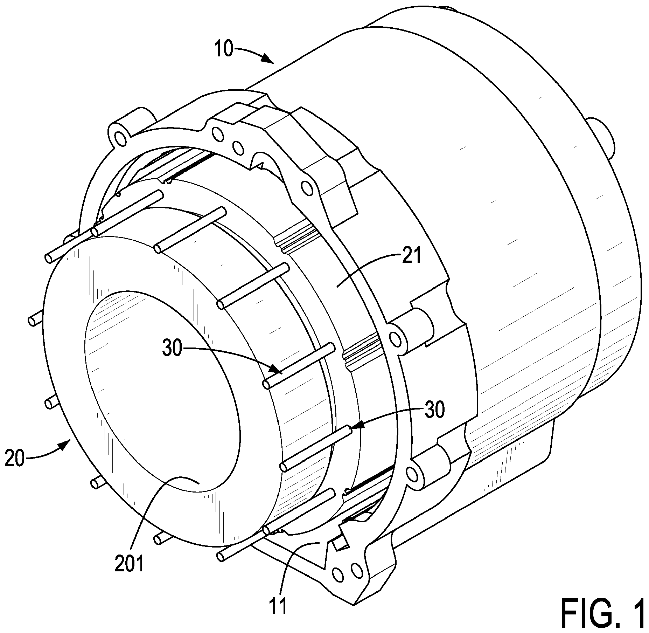

With reference to Figs. 1 to 3, a first embodiment of a motor device with rapid heat dissipation in accordance with the present invention comprises a shell 10, a stator 20, and multiple heat conducting rods 30. The shell 10 is a cylinder, and is a part of an overall casing of the motor device. The shell 10 has an outer side, an inner side, an inner surface, and an opening 11. The opening 11 is disposed at an end of the shell 10, and communicates with the outer side and the inner side of the shell 10.

The stator 20 is securely disposed inside the shell 10 through the opening 11, and the stator 20 has two ends, a middle portion, a chamber 201, and a core 21. One of the two ends of the stator 20 is disposed in the shell 10, and the other one of the two ends of the stator 20 protrudes outwardly to the opening 11. The middle portion is located between the two ends of the stator 20. The chamber 201 is formed in a center of the stator 20, and is able to accommodate a rotator. How the rotator revolves in the stator 20 pertains to general knowledge in the art, so detailed description thereof will be omitted. The core 21 protrudes on the middle portion along a radial direction of the stator 20, so a diameter of the core 21 is larger than diameters of the two ends of the stator 20. The core 21 has an outer surface and multiple grooves. The outer surface contacts the inner surface of the shell 10, and multiple grooves are disposed on the core 21 along an axial direction of the stator 20 at spaced intervals.

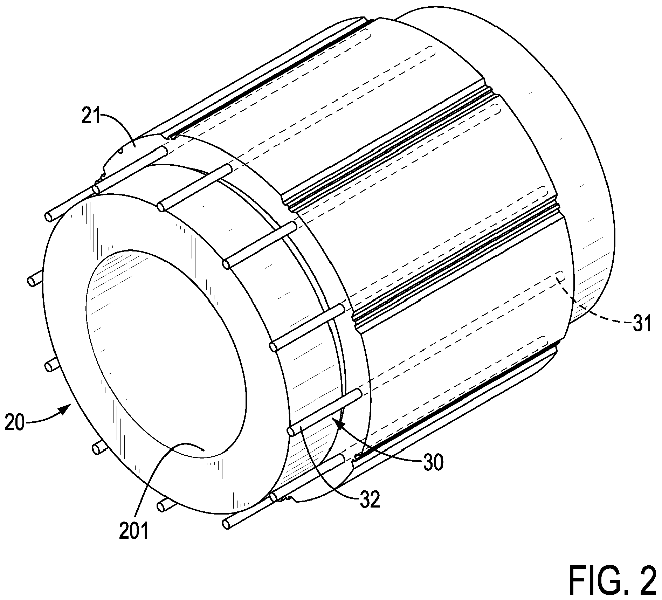

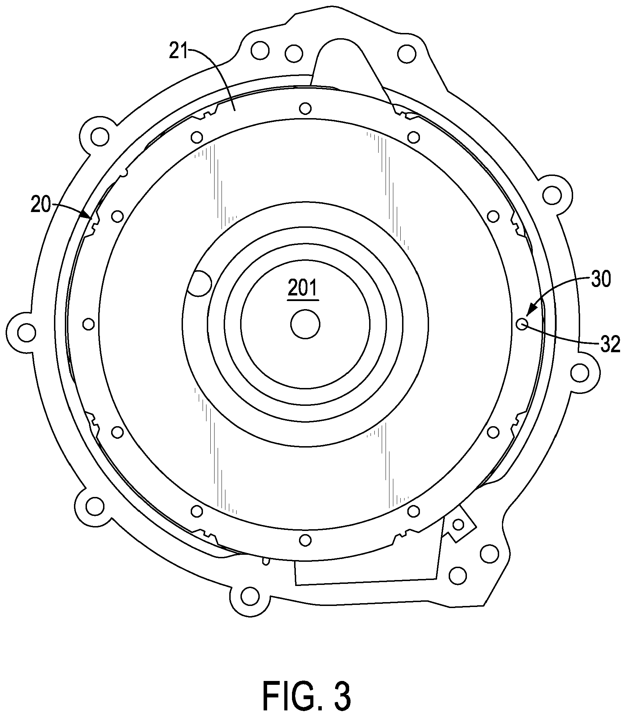

With reference to Figs. 2 and 3, each one of the multiple heat conducting rods 30 has high thermal conductivity, so they can transfer waste heat out of the stator 20. Each one of the heat conducting rods 30 is parallel to an axis of the stator 20, and two ends of each heat conducting rod 30 are a fixed end 31 and a free end 32, respectively. The heat conducting rod 30 is mounted to the stator 20 with the fixed end 31 being inserted to one of the multiple grooves of the core 21. The free end 32 protrudes from the core 21 along the axial direction of the stator 20, and further protrudes and extends out of the opening 11 of the shell 10.

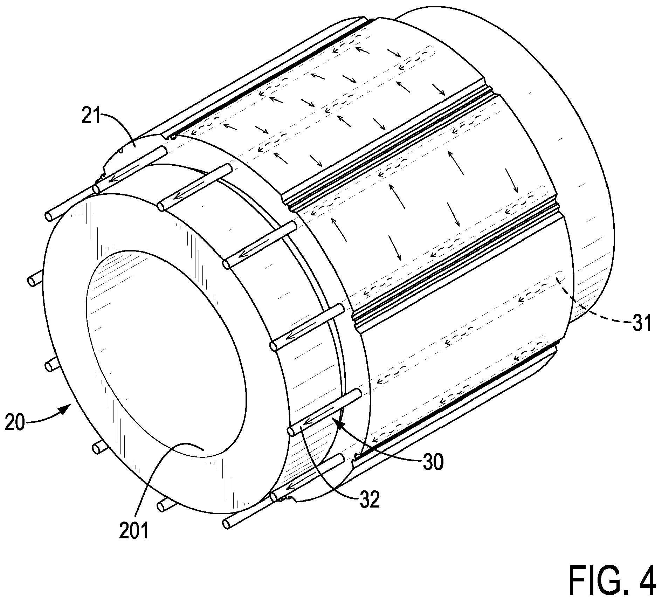

With reference to Fig. 4, when the rotator revolves at a high speed, waste heat is dissipated through the core 21, from the stator 20 to the multiple heat conducting rods 30. Due to the high thermal conductivity of the heat conducting rods 30, the motor device dissipates the waste heat rapidly via the free ends 32 of the heat conducting rods 30. As a result, a working temperature may be maintained within a reasonable range, so damage to circuits of the stator 20 and shortening of the motor device's service life may be prevented.

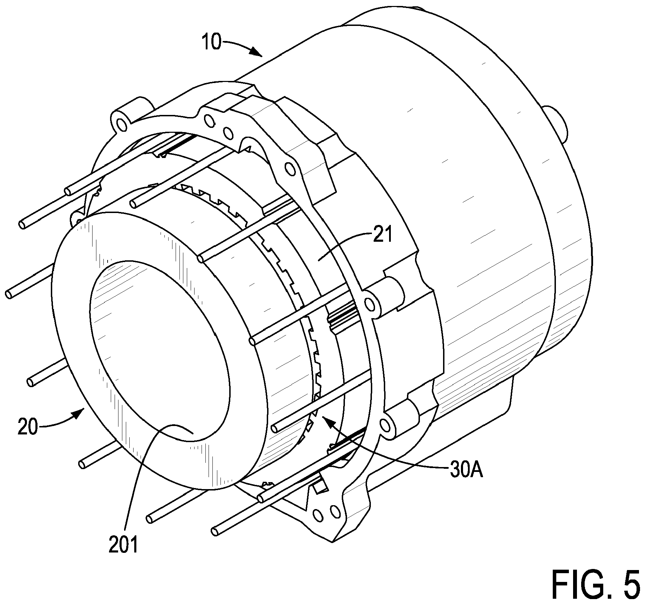

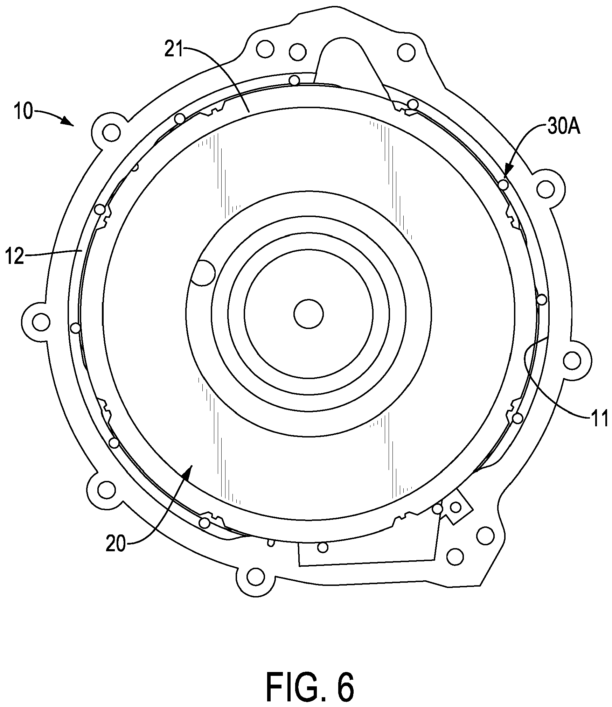

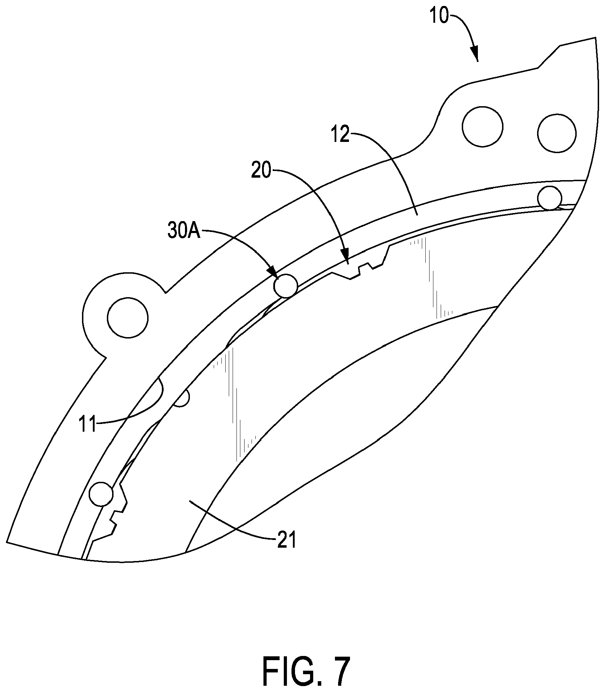

Figs. 5 to 7 show a second embodiment of a motor device with rapid heat dissipation in accordance with the present invention. Differences between the second embodiment and the first embodiment include that in the second embodiment the shell 10 further comprises a protrusion 12, and the protrusion 12 radially protrudes on the inner side the shell 10, and extends from a position near the opening 11 to a bottom side of the shell 10. The protrusion 12 has an inner surface. With reference to Figs. 6 and 7, the multiple heat conducting rods 30A are mounted to the protrusion 12 at spaced intervals, and each one of the heat conducting rods 30A is parallel to the axis of the stator 20. An outer surface of each one of the heat conducting rods 30A protrudes from the inner surface of the protrusion 12, so the outer surfaces of the heat conducting rods 30A may contact the core 21 of the stator 20 or be exposed between the stator 20 and the protrusion 12.

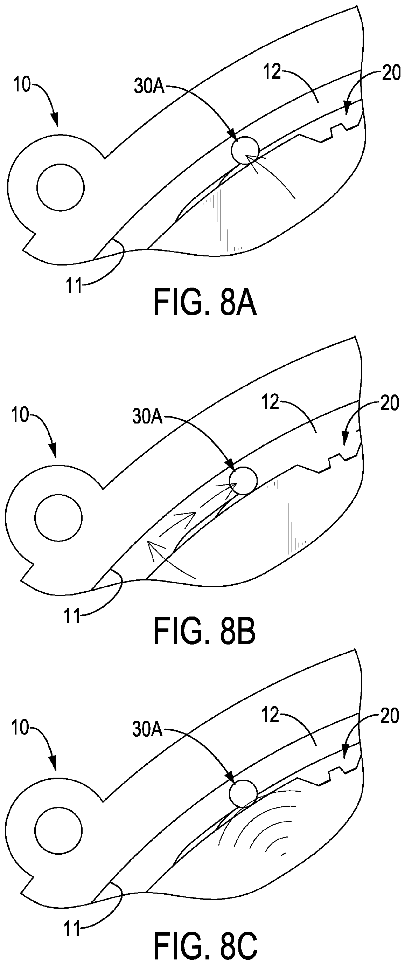

In the second embodiment, three paths for heat dissipation are provided. Firstly, with reference to Fig. 8A, waste heat may be conducted by the heat conducting rods 30A via contact with the core 21. Secondly, with reference to Fig. 8B, the wasted heat may also pass through the core 21 of the stator 20, the protrusion 12 of the shell 10, and eventually the heat conducting rods 30A. At last, the waste heat may radiate from the stator 20, be absorbed by the heat conducting rods 30A, and be emitted by the heat conducting rods 30A.

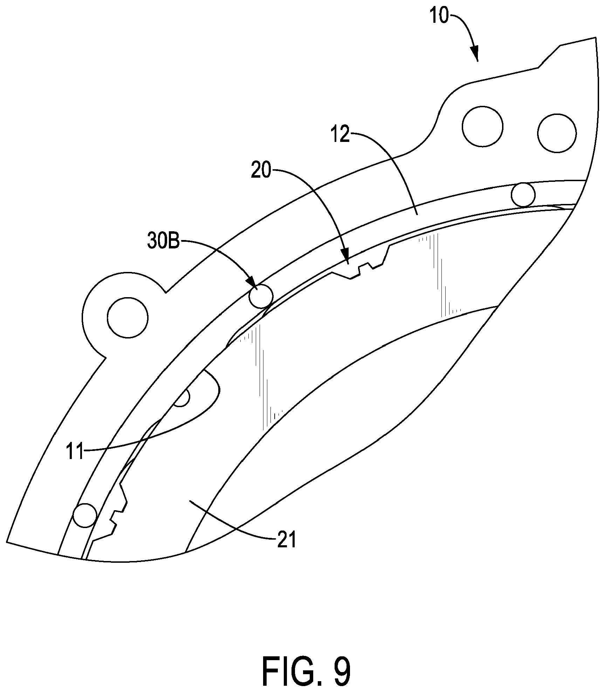

A third embodiment of a motor device with rapid heat dissipation in accordance with the present invention is shown in Fig. 9. Differences between the third embodiment and the second embodiment include that in the third embodiment the multiple heat conducting rods 30B are covered by the protrusion 12, so the waste heat can only be dissipated via the second path described in the former paragraph. Although in the present embodiment, the waste heat must pass through the shell 10, a heat dissipation effect can still be accomplished by adjusting the number or material of the multiple heat conducting rods 30B.

With the aforementioned technical features of the present invention, the motor device with rapid heat dissipation can emit waste heat rapidly with the multiple heat conducting rods 30, 30A, 30B, so the working temperature of the motor device may be controlled to prevent excessively high temperature from damaging the circuits and shortening the motor device's service life.

## Claims

1. A motor device with rapid heat dissipation, **characterized in that** the motor device comprises:
a shell (10);
a stator (20) mounted inside the shell (10); and
multiple heat conducting rods (30) separately mounted to the stator (20), and each one of the multiple heat conducting rods (30) having
a free end (32) extending away from the stator (20).

2. The motor device with rapid heat dissipation as claimed in claim 1, wherein each one of the multiple heat conducting rods (30) is parallel to an axis of the stator (20).

3. A motor device with rapid heat dissipation, **characterized in that** the motor device comprises:
a shell (10);
a stator (20) mounted inside the shell (10) and contacting the shell (10); and
multiple heat conducting rods (30A, 30B) separately mounted to the shell (10) and extending away from the stator (20).

4. The motor device with rapid heat dissipation as claimed in claim 3, wherein each one of the multiple heat conducting rods (30A, 30B) is parallel to an axis of the stator (20).

5. The motor device with rapid heat dissipation as claimed in claim 3 or 4, wherein each one of the multiple heat conducting rods (30A) has an outer surface protruding from an inner side of the shell (10), so the multiple heat conducting rods (30A) may contact the stator (20).

6. The motor device with rapid heat dissipation as claimed in claim 3 or 4, wherein each one of the multiple heat conducting rods (30B) is covered by the shell (10), so waste heat must pass through the shell (10).
